# EUROPEAN PATENT APPLICATION

(11) **EP 1 307 033 A1**
(43) Date of publication of application: **02.05.2003**
(21) Application number: 02705072.3
(22) Date of filing: 04.03.2002
(51) Int. Cl.: H04M 1/274, H04M 1/247, H04M 1/725, H04M 11/00, H04M 1/56, H04Q 7/38, G06F 13/00

(54) **PORTABLE RADIO TELEPHONE**

(30) Priority: 07.03.2001 JP 2001063851
(71) Applicant: MATSUSHITA ELECTRIC INDUSTRIAL CO., LTD., Kadoma-shi, Osaka 571-0050 (JP)
(72) Inventor: YAMAMOTO, Osamu, Sendai-shi, Miyagi 980-0004 (JP); YOKOI, Shigeki, Yokohama-shi, Kanagawa 221-0811 (JP)
(74) Representative: Grünecker, Kinkeldey, Stockmair & Schwanhäusser Anwaltssozietät
(86) International application number: JP0201970
(87) International publication number: WO02071730

(57) **Abstract**

An object of the present invention is to provide a portable wireless telephone apparatus in which while information provided on the Internet is viewed, a connection address of a communication counter party is automatically retrieved by designating/selecting an arbitrary character string among the viewed information so as to improve operability thereof.

To achieve the above-described object, in a portable wireless telephone apparatus "A" of the present invention, for connecting lines among a plurality of wireless base stations through wireless channels, which are wire-connected to a switching station, so as to view information provided on the Internet, an arbitrary character string present in the above-described information under observation is collated with a registered character string of telephone directory information stored in the own portable wireless telephone apparatus, when a detection is made of such a fact that the selected arbitrary character string has been registered in the telephone directory information, and a communication counter party corresponding to this arbitrary character string has been registered in the telephone directory information, a control unit 5 sets a telephone communication to this communication counter party.

## Description

### <TECHNICAL FIELD>

The present invention is related to a portable wireless telephone apparatus capable of accessing information such as home pages provided on the Internet, and also capable of transmitting/receiving electronic mails via the Internet. More specifically, the present invention is directed to a portable wireless telephone apparatus capable of calling a communication counter party by designating an arbitrary character string contained in received information.

### <BACKGROUND ART>

Portable wireless telephone apparatus capable of accessing such information as home pages provided on the Internet, and also capable of transmitting/receiving electronic mails through the Internet have been actively popularized. Among these portable wireless telephone apparatus, for instance, the portable wireless telephone apparatus, as described in Japanese Laid-open Patent Application No. Hei-10-155038, is provided with such a function that while a telephone number and an electronic mail address which are described in a received electronic mail are retrieved, a telephone call is issued with respect to this telephone number, or this electronicmail address, and also, either the telephone number or the electronic mail address is registered into a telephone directory memory. Also, in this prior art, the following function is provided. That is, while a "name" described in an electronic mail is used as a retrieve character string, storage information of the telephone directory memory is searched, a telephone number corresponding to this searched name is detected, and then, a telephone call is issued with respect to this detected telephone number.

The above-described portable wireless telephone apparatus related to the conventional technique owns the following problem. That is, for instance, in such a case that a person who is interested in computers finds out a certain attractive character string, e.g., such a character string of a "personal computer" on a view screen of an electronic mail and information, and then this person wants to telephone a friend who has sufficiently much knowledge about personal computers so as to ask this friend about personal computer aspects, this person must search a telephone number of this friend by consulting a telephone directory installed in the portable wireless telephone apparatus. Then, this person must enter this searched telephone by manipulating button keys in order to issue a telephone call, which requires such a cumbersome operation.

The present invention has been made to solve the above-described problem of the prior art, and therefore, has an object to provide a portable wireless telephone apparatus capable of issuing a telephone call with respect to a communication counter party (telephone, electronic mail address, information address) related to an arbitrary character string contained in received character string information by designating this arbitrary character string.

### <DISCLOSURE OF THE INVENTION>

The above-described object may be achieved by such a portable wireless telephone apparatus for connecting lines among a plurality of wireless base stations through wireless channels, which are wire-connected to a switching station, so as to view information provided on the Internet, comprising: retrieving means for collating an arbitrary character string present in the information under observation with a registered character string of telephone directory information stored in the own portable wireless telephone apparatus; and control means operated in such a manner that when the retrieving means detects that a selected arbitrary character string is registered in the telephone directory information and a communication counter party corresponding to the arbitrary character string has been registered in the telephone directory information, the control means sets a telephone communication to the communication counter party.

Preferably, the above-described portable wireless telephone apparatus is comprised of an identification information item for registering thereinto an arbitrary character string, and for setting as to whether or not the information registered into the identification information item is such an object to be retrieved by the retrieving means within the telephone directory information. Furthermore, the portable wireless telephone apparatus is preferably comprised of means operated in such a manner that when a selected arbitrary character string is not present in the telephone directory information, the selected arbitrary character string is stored into the telephone directory information.

In addition, preferably, in the above-described portable wireless telephone apparatus, the control means sets a telephone communication for executing a connecting process operation which is selected from a connecting process operation of a voice telephone communication, a connecting process operation of an electronic mail, and a connecting process operation to the information provided on the Internet. Also, the portable wireless telephone apparatus is preferably comprised of counting means for counting a use frequent degree as to each of a connecting process operation of a voice telephone communication to a communication counter party, a connecting process operation of an electronic mail, and a connecting process operation to the information provided on the Internet; and the control means sets the telephone communication as to such a connecting process operation whose count value counted by the counting means becomes the largest count value. Also, the portable wireless telephone apparatus is comprised of means for invalidating the counting process operation by the counting means.

Moreover, preferably, the selection of the arbitrary character string from the information under display is carried out by operating a button key of an input unit. Also, the character strings which have been registered in the telephone directory information among the information under display are displayed in a discriminatable manner with respect to other character strings, and the selection of the arbitrary character string is made from the character strings displayed in the discriminatable manner.

Also, the above-described object of the present invention may be achieved by such a portable wireless telephone apparatus for connecting lines among a plurality of wireless base stations through wireless channels, which are wire-connected to a switching station, so as to display accessed information provided on the Internet on a screen, comprising: telephone directory information storage means operated in such a manner that when an arbitrary character string contained in the information displayed on the screen is designated/selected by input means, the arbitrary character string is registered into the telephone directory information storage means in relation to a transmitting destination address.

Furthermore, preferably, the above-described portable wireless telephone apparatus is comprised of means for automatically recognizing as to whether or not the designated/selected arbitrary character string corresponds to any one of a telephone number, an electronic mail address, and an address of the information provided on the Internet, and for automatically setting the automatically-recognized arbitrary character string to a relevant item of the telephone directoryinformationstoragemeans. Also, in addition to items for registering "name", "telephone number", "electronic mail address", and "address of information provided on the Internet" respectively, such an item to register by classifying the arbitrary character string to register therein the classified arbitrary character strings is provided in the telephone directory information storage means.

In addition, preferably, the portable wireless telephone apparatus is comprised of control means operated in such a manner that while the accessed information provided on the Internet is viewed, an arbitrary character string located in the information is designated/selected by the input means and the designated/selected arbitrary character string has been registered in the telephone directory information stozage means, the control means sets a telephone communication to a transmitting destination address corresponding to the arbitrary character string.

In the portable wireless telephone apparatus of the present invention, in such a case that an arbitrary character string contained in received character string information (namely, information provided on the Internet under observation, contents of received electronic mails) is designated and then a telephone directory registering process operation is selected, this arbitrary character string is registered in relation to address information (telephone number, electronic mail address, information address) related to the character string information. As a result, since a communication counter party is automatically retrieved by designating/selecting the arbitrary character string, such an operation for entering a telephone number used to designate the communication counter party can be omitted.

Also, since arbitrary character string information to be registered into a telephone directory function can be classified based upon identification item, it is possible to set as to whether or not an automatic retrieving operation is required by utilizing this classification, resulting in an improvement of operability of the portable wireless telephone apparatus. Furthermore, since a use frequent degree every connecting mode is counted, such a connecting mode in response to a use mode of a user can be automatically judged, so that operability of the portable wireless telephone apparatus can be furthermore improved.

### <BRIEF DESCRIPTION OF THE DRAWINGS>

Fig. 1 is a structural diagram for indicating a portable wireless telephone apparatus according to an embodiment mode of the present invention.
Fig. 2 is a flow chart for describing an operation sequence of the portable wireless telephone apparatus indicated in Fig. 1.
Fig. 3 is a diagram for representing an example of data registered as telephone directory information of the portable wireless telephone apparatus shown in Fig. 1.
Fig. 4 is a diagram for exemplifying a screen transition when a telephone calling operation is carried out by the portable wireless telephone apparatus indicated in Fig. 1.
Fig. 5 is a diagram for exemplifying a screen transition when data is registered as telephone directly information in the portable wireless telephone apparatus shown in Fig. 1.
Fig. 6 is an explanatory diagram for explaining such a case that a use frequent degree is counted every connection mode of a user in the portable wireless telephone apparatus indicated in Fig. 1.
Fig. 7 is a diagram for exemplifying a screen transition of telephone calling operation in the case that the use frequent degree is counted every connection mode of the user.

It should be noted that in the drawings, symbol "A" is a portable wireless telephone apparatus, reference numeral 1 shows a microphone, reference numeral 2 denotes a speaker, reference numeral 3 represents a voice signal processing unit, reference numeral 4 shows a communication control unit, reference numeral 5 indicates a control unit, reference numeral 6 represents a display information control unit, reference numeral 7 shows a display, reference numeral 8 denotes an input unit, and reference numeral 9 shows a telephone directory information storage unit.

### <BEST MODE FOR CARRYING OUT THE INVENTION>

Referring now to drawings, an embodiment mode of the present invention will be described.

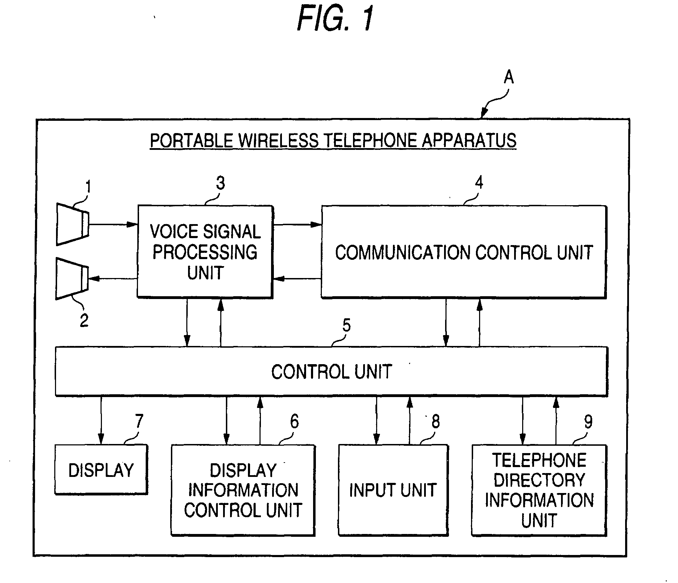

Fig. 1 is a functional block diagram of a portable wireless telephone apparatus according to an embodiment mode of the present invention. This portable wireless telephone apparatus "A" is arranged by providing a microphone 1 for inputting thereinto voice, a speaker 2 for outputting voice, a voice signal processing unit 3 equipped with a function capable of performing voice controls of the microphone 1 and the speaker 2, a communication control unit 4 provided with a modulating/demodulating function for a voice signal and electronic mail data in order that the voice signal and the electronic mail data can be communicated, a control unit 5 constructed of a CPU and the like, a display control unit 6 controlling information to be displayed, a display unit (display) 7, an input unit 8 constituted by a liquid crystal display device and the like, and a telephone directory information storage unit 8 constituted by numeral keys of "0" to "9", and other button keys .The telephone directory information storage unit 9 stores and manages "names", "telephone numbers", "electronic mail address", "addresses used to view information provided on Internet such as home page addresses" as telephone directory information.

The input unit 8 owns a function used to input key depressions and the like for manipulating the portable wireless telephone apparatus "A", another function used to enter sentences of electronic mails and registered information which is stored in the telephone directory information storage unit 9, and another function used to display these information on the display unit 7, and in addition, another function by which a user of the portable wireless telephone apparatus designates/selects an arbitrary string from information such as home pages, which is received via the Internet.

Information appeared on the Internet, which is received by the portable wireless telephone apparatus "A" is displayed on the display 7 by the display control unit 6. In the case that an arbitrary character string is designated by the input unit 8 from the information under display and the control unit 5 selects this character string, the control unit 5 controls the display control unit 6 to display this selected character string in a discriminatable manner in such a manner that this selected character string is displayed in a flicker mode, or an inverting display mode. As a result, the control unit 5 notifies such a fact that the arbitrary character string is selected to the user.

In the case that the user inputs a telephone directory retrieving instruction from the input unit 8 and then the control unit 5 accepts this telephone directory retrieving instruction, the control unit 5 searches the storage content of the telephone directory information storage unit 9 while this selected character string is recognized as a retrieving character string, and derives such an information whose identification result becomes coincident with the retrieving character string, and then transfers this derived information to the display control unit 6 so as to display this transferred information on the display 7.

When the user who has viewed the retrieve result indicated on the display 7 selects any one of "telephone number", "electronic mail address", and "address used to view information on the Internet" by employing the input unit 8, the control unit 5 executes the below-mentioned relevant process operation based upon this selected result by the user.

In the case that "telephone number" is selected, the control unit 5 controls both the voice signal processing unit 3 and the communication control processing unit 4 so as to perform a telephone calling operation, to receive voice produced from the microphone 1, and also to execute a telephone communication operation of voice output from the speaker 2. Otherwise, in the case that the user selects not the voice communication, but a short message transmission, the control unit 5 accepts an input operation for forming a short message, displays the formed short message character string information, and controls the communication control unit 4 and send this short message to a communication counter party.

In the case that "electronic mail address" is selected, the control unit 5 accepts via the input unit 8 such an input operation capable of forming a mail from the user, and then, the display information control unit 6 displays this mail on the display 7. Then, the communication control unit 4 transmits this formed mail.

In the case that "address used to view information provided on the Internet" is selected, the control unit 5 executes a line connecting operation by controlling the communication control unit 4. Thereafter, the control unit 5 acquires information located at the relevant address on the Internet, and displays this acquired information on the display 7.

In such a case that the input unit 8 accepts a telephone directory registering instruction issued from the user, the control unit 5 registers the character string selected by the user into the telephone directory information storage unit 9 with respect to the telephone directory information storage unit 9. Then, the controls unit 5 controls the input unit 8 to accept information entered from the user with respect to such an information other than the registered information, and also, controls the display information control unit 6 to display this accepted information on the display 7.

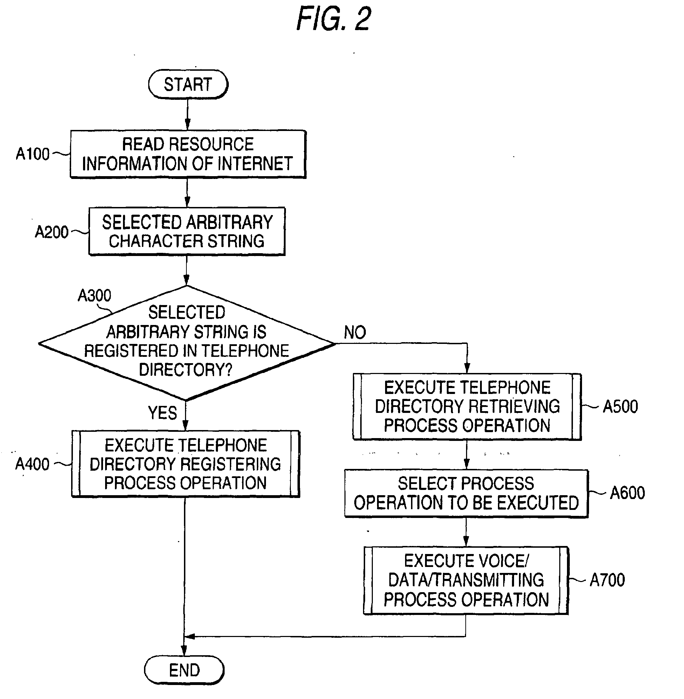

Fig. 2 is a flow chart for describing a sequential process operation executed when a user selects an arbitrary character string used in a telephone calling operation by displaying information provided on the Internet on a display. In a step A100, the received information provided on the Internet is displayed. In the next step A200, a character string selecting operation is carried out by the user from the information. In the character string selecting operation executed in this step A200, the user can select such character strings of "telephone number", "electronic mail address", and "address used to access information provided on the Internet" contained in the information similar to the conventional manner.

In this embodiment mode, the user can furthermore select an arbitrary character string other than the above-described character strings. This arbitrary character string corresponds to a character string which is made coincident with a "sort" set by the user, or a character string which is wanted by the user. For instance, the user may select from the information, a character string which is related to a work of the user, or such a character string in which the user is interested. For example, the user may select such a character string as a "personal computer", and a "memory." In this case, the term "sort" corresponds to one of identification information which is employed when the user classifies a character string.

In the next step A300, the control unit judges as to whether or not the process operation selected by the user corresponds to "registration into telephone directory information." When this judgement result becomes "yes", namely this process operation corresponds to the registering process operation with respect to the telephone directory information, the process operation is advanced to a step A400. In this step A400, the character string selected in the step A200 is set with respect to one record of the telephone directory information, such an information other than the set item is set in accordance with an input by the user, and all of the set information is saved in the telephone directory information. Then, this process operation of Fig. 2 is accomplished.

In the case that the judgement result of the step A300 becomes "no", namely, the selected process operation is not the registering process operation to the telephone directory information, since the control unit 5 judges that the user selects the telephone calling process operation, the process operation is advanced to a step A500. In this step A500, while the arbitrary character string selected in the step A300 is used as a character string to be retrieved, the control unit 5 retrieves the telephone directory information, and then the process operation is advanced to a step A600. In the step A600, the control unit 5 displays the data retrieved in the step A500, and causes the user to select a process operation which is wanted to be executed, for example, to select any one of "telephone calling to telephone number", "forming and transmitting of electronic mail", "forming and transmitting of short message", "viewing of information provided on the Internet", and the like. Then, the process operation is advanced to the next step A700. In this step A700, the control unit 5 forms transmission data in accordance with the processing operation selected in the step A600, and performs a voice communication process operation, and a calling process operation of data, and then, the process operation shown in Fig. 2 is accomplished.

It should be noted that when it can be seen that the communication counter party to be called is not registered in the telephone directory information as a result of the retrieving operation executed in the step A500, the process operation may be automatically advanced to the step A400. Such a data for defining this selected character string in correspondence with an address of this information (namely, information under view) provided on the Internet may be newly registered in the telephone directory information.

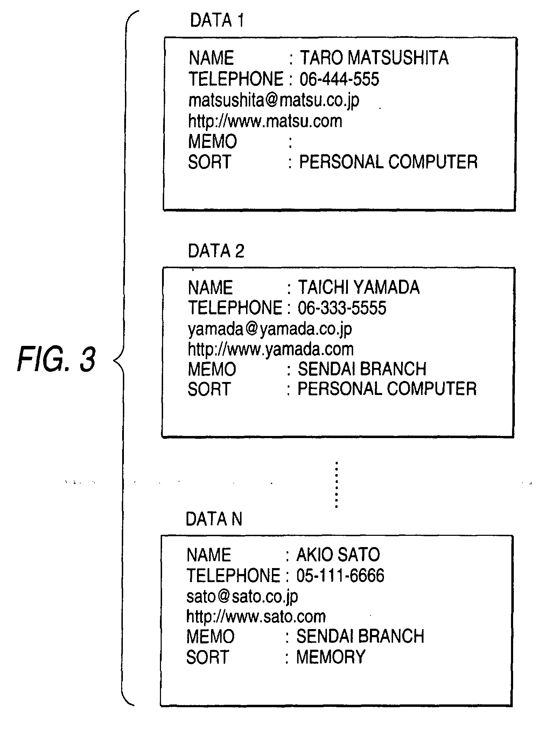

Fig. 3 is a diagram for indicating an example of data registered in the telephone directory. In this example shown in the drawing, data about MR. TaroMatsushita, MR. Taichi Yamada, ---, MR. Akio Sato have been stored in the telephone directory information storage unit 9 of the portable wireless telephone apparatus A. These data are names, telephone numbers, electronic mail addresses, home page addresses of individuals, memorandums, and sorts. In this example, as the memorandums, names of firms to which persons belong, and names of companies where persons work have been registered. As the sort information, names of goods which are handled by individuals. In this embodiment mode, both this memorandum and this sort are employed as identification information.

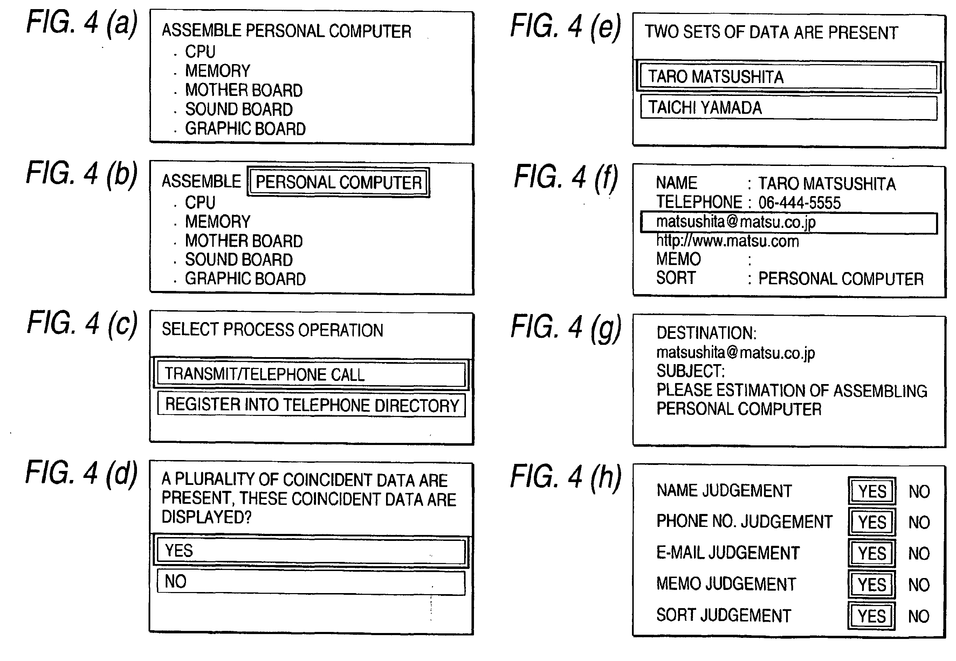

Next, a description will be made of concrete process operations executed in the case that a character string contained in information provided in the Internet, which is displayed on a screen, is designated so as to issue a telephone call to a communication party. Fig. 4(a) indicates one example of information provided on the Internet, which is indicated on the display. When a user who views this information selects/designates such a character string as a "personal computer", as indicated in Fig. 4(b), this character string is displayed in either an inverting mode or a flickering mode, and thus, the selected condition is notified to the user. This character string notification may be realized by employing other modes, for example, an underline may be displayed on this selected character string, or a speech may be made of the selected character string.

When the user inputs a predetermined operation from the input unit 8, the present screen is transferred to a screen as shown in Fig. 4(c). On this screen, a selection is made as to whether a message transmitting/telephone calling process operation by using the selected character string is performed, or a telephone directory registering process operation by using the selected character string is carried out. In this example, the message transmitting/telephone calling process operation is selected. As a result, the telephone directory retrieving means retrieves the selected character string "personal computer" from the character strings stored in the telephone directory information storage unit 9, and displays such a data whose collation is made coincident with the selected character string. In this case, since there are plural sets of data whose collation is made coincident with the selected character string, the telephone directory retrieving means displays such a screen of Fig. 4(d) so as to inquiry to the user, and then displays a data list (see Fig. 4(e)) on the display screen.

As a result of the collation as to the character string "personal computer", in the case that there is no data which is made coincident with the character string "personal computer" in the telephone directory information, the registeringprocess operation to the telephone directory information is automatically carried out. In this example, the character string "personal computer" is registered on the sort column within the data of Fig. 3, and an address of a home page shown in Fig. 4(a) is registered as the home address. As a result, such a data that "name", "telephone number" and the like become empty columns are automatically formed, and then the user will enter data with respect to the empty columns later.

On the data list screen of Fig. 4 (e), "name" of such data having the character string "personal computer" contained in the telephone directory information shown in Fig. 3 is displayed. When the user selects "Taro Matsushita" on this screen, as indicated in Fig. 4(f), a data list of "Taro Matsushita" is displayed on the screen. In the case that the user wants to transmit an electronic mail to a mail address of "Taro Matsushita" on this screen, the user selects an electronic mail address. As a result, next, the present screen is transferred to a mail forming screen of Fig. 4(g), and then, the user forms a mail document on this mail forming screen to transmit the formed electronic mail.

In the case that a telephone number of "06-444-5555" is selected on the screen of Fig. 4(f), a telephone call is issued to the selected telephone number. In the case that an address of "http://www.matsu.com" used to access information provided on the Internet is selected, the portable wireless telephone apparatus A is connected to the designated address via the Internet so as to acquire the information located at this address, so that the acquired information is displayed on the display 7.

As a result of retrieve/collation between the selected character string and the telephone directory information, in such a case that a plurality of information are retrieved, only such an information which has been firstly collated may be displayed. Alternatively, similar to the above-described embodiment mode, the user may select the desirable information from all of the data whose collation results are made coincident with the selected character string.

Also, while the control means accepts such an information as to whether or not the collation is carried out based upon the information supplied from the user, the control unit may determine as to whether or not the collation is performed based upon the identification information by setting the condition. Concretely speaking, as indicated in Fig. 4(h), while such a condition as to whether or not the selected character string is collated with the telephone directory information may be set to each of the items contained in the telephone directory information, if the sort judgement is set to "no", then there is no data which is collated with "personal computer" in this example.

In accordance with this embodiment mode, the telephone directory information is formed by relating the calling destination information such as the telephone number to the arbitrary character string which has conventionally no relationship with the transmitting information. Since this arbitrary character string is also an object to be retrieved, a total operation time of the calling operations can be suppressed. Also, since the arbitrary character string is classified based on the item of the identification information and the selection can be made as to whether or not the collation judgement with the selected character string is made, when the user wants to perform the collation judgement, the retrieve operation by using this arbitrary character string can be carried out. As a result, there is no chance that the user can avoid cumbersome operations due to unnecessary retrieving operations and notifications of results as to the unnecessary retrieving operations.

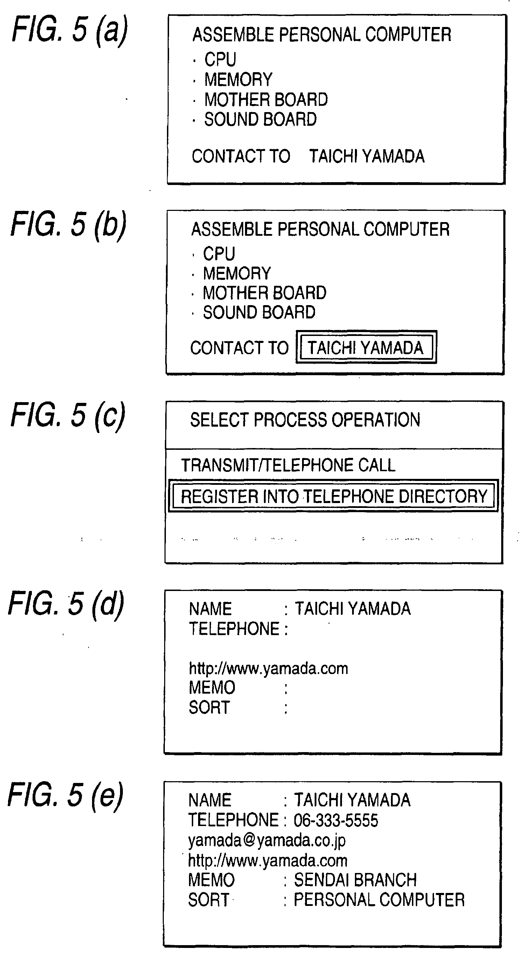

Next, a description will now be made of one example of concrete operation for registering the telephone directory information in the portable wireless telephone apparatus according to this embodiment mode. Fig. 5(a) is a screen example for showing such an information which is viewed on the Internet and is indicated on the display of the portable wireless telephone apparatus. The user of the portable wireless telephone apparatus selects an arbitrary character string on this display screen. In this example, as shown in Fig. 5(b), the user selects such a name of "Taichi Yamada". This selected character string is displayed in the inverting mode by this character selection. Next, since the user manipulates the button of the input unit 8, a process selection screen of Fig. 5(c) is displayed. On this process selection screen, the user selects the telephone directory registering process operation.

When the telephone registering process operation is selected, a telephone directory information registration screen of Fig. 5(d) is displayed, and the telephone directory registering means automatically recognizes that the selected character string of "Taichi Yamada" corresponds to the character string of the name, and sets this selected character string at the relevant item position and then stores this selected character string. When the selected character string corresponds to the telephone number character string information, this telephone number character string information is set to a telephone number relevant item portion. When the selected character string corresponds to an electronic mail address, this electronic mail address is set to an electronic mail address relevant portion. When the selected character string corresponds to such an address character string used to view information appearing on the Internet, this address character string is set to an address relevant portion used to view the information appearing on the Internet. In the case that a selected character string corresponds to such a character string other than the above-explained character string, since there is such high probability that this selected character string corresponds to a name, this selected character string is set/registered to a name item portion. Then, in this embodiment mode, in correspondence with this "name", an address "WWW.yamada.com" of a home page under view is automatically registered.

A judgement of character strings is carried out as follows: That is, in such a case that a selected character string is constituted by character strings such as "numeral characters", "+", "□", and "-", which are used when a telephone number is entered, this selected character string may be judged as the telephone number. In the case that a selected character string is constituted by combining "arbitrary character string", "@", and "." with each other, this selected character string may be judged as an electronic mail address. When a selected character string corresponds to a character string which starts from "http", the selected character string may. be judged as an address used to view information provided on the Internet. As a result, the telephone directory registering means automatically sets the selected character strings based upon these judgement results.

A selected character string may be corrected by the user. For instance, in the case that an arbitrary character string other than "name" is selected and this selected arbitrary character string is automatically set to the item of "name", this arbitrary character string may be moved to either the MEMO item or the sort item in accordance with an instruction entered from the user. As to an empty column, such a data shown in Fig. 5(e) is accomplished by manually inputting by the user.

As previously explained, the portable wireless telephone apparatus according to this embodiment mode can automatically judge as to whether or not the selected character string corresponds to such a character string relevant to which information, and can automatically set/register the selected character string to the relevant item of the telephone directory information. As a consequence, the portable wire less telephone apparatus can reduce a total number of the input operations executed by the user.

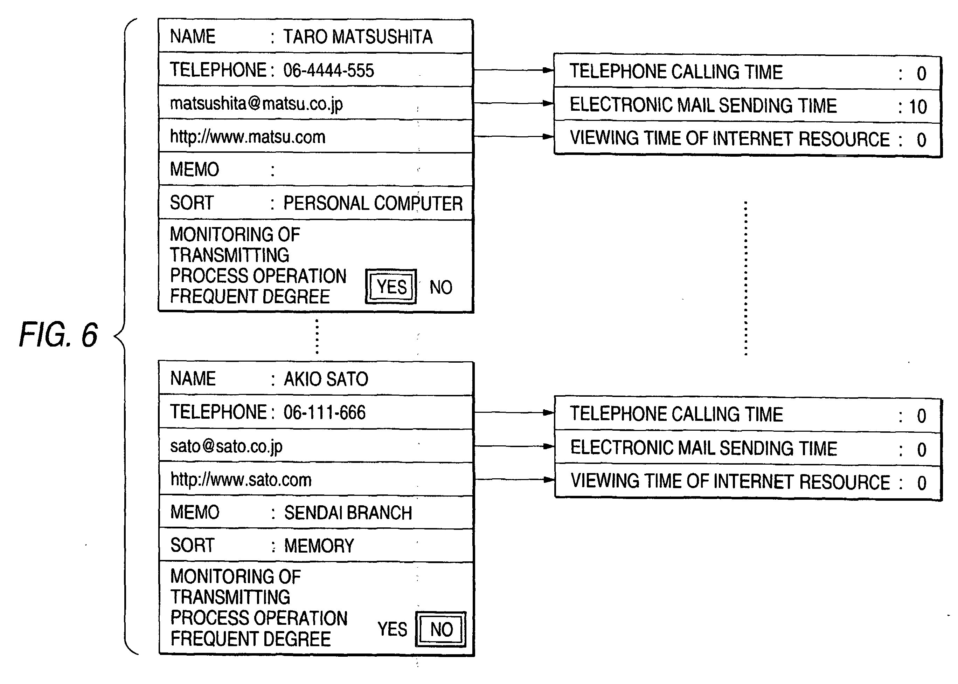

As indicated in Fig. 3, as to the telephone directory information of the above-described embodiment mode, there are three items of the telephone number, the electronic mail address, and the information address on the Internet as the transmitting destination address. Thus, as shown in Fig. 6, use frequent degrees with respect to the three telephone calling destination addresses for the respective persons are counted in the portable wireless telephone apparatus may judge such a fact that transmitting operations to someone contain a large number of electronic mails whereas transmitting operations to someone contain a large number of telephone speech communications . The user may set as to whether or not this transmitting process operation frequent degree is monitored.

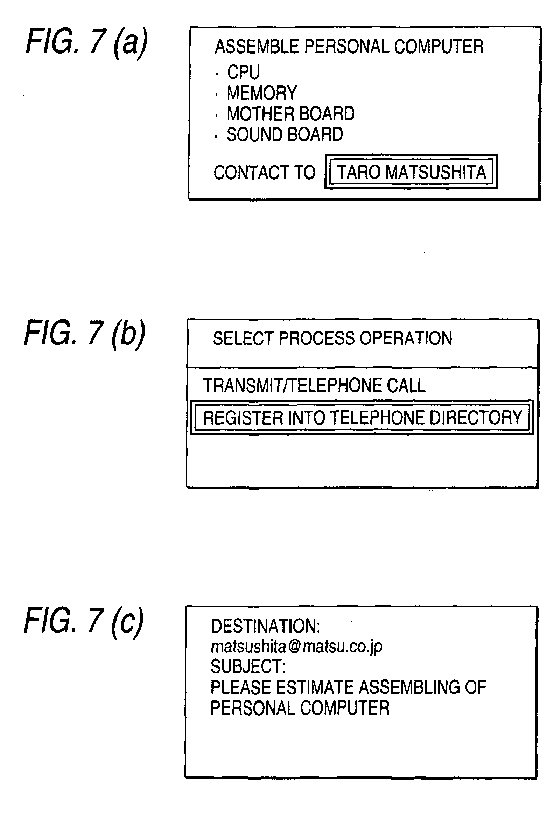

Since monitoring of the transmitting process operation frequent degree is set in the above-described manner, as indicated in Fig. 7(a), in such a case that the user views the information provided on the Internet and selects "Taro Matsushita" from this information, and then, the user selects the transmitting/telephone calling process operation on the next screen (seen Fig. 7(b)), the portable wireless telephone apparatus may automatically identify that which transmitting process operation owns the highest frequent degree among the transmitting process operations directed to "Taro Matsushita". Then, in the example shown in Fig. 6, since the transmitting time of the electronic mail is the highest, the display screen may be automatically moved from the display screen of Fig. 7(b) to the display screen of Fig. 7(c), namely the electronic mail forming screen.

As previously described, in the portable wireless telephone apparatus according to this embodiment mode, every time the user performed the transmitting process operations in the past, for example, every time the user executes such transmitting process operations as the mail transmissions and the voice calling operations, the frequent degrees thereof are counted. As a result, when the user tries to perform the transmitting operation, the portable wireless telephone apparatus can execute such a transmitting process operation which is used at the highest frequent degree as to the transmission counter party without any selecting operation by the user, so that the operation workload of the user can be reduced.

It should also be noted that in this embodiment mode, such an item for selecting as to whether or not the transmitting process frequent degree is monitored is provided with respect to the telephone directory data every individual, which are stored in the telephone directory information storage unit. Alternatively, the item for setting the transmitting process frequent degree is not set with respect to the data for the respective persons to be managed, but may be set to the user as a setting item with respect to the entire portion of the telephone directory information storage unit.

In the above-described embodiment mode, while the user views the electronic mail and the information indicated on the display, the user designates the arbitrary character string to be selected by manipulating the button key of the input unit and the like. Alternatively, when information to be displayed on the display unit is received, the portable wireless telephone apparatus may automatically collate this received information with the registered information of the telephone directory information, and then, may set such a character string made coincident with the registered information as a selective-substitution character string by displaying this character string on the display screen of the display unit in the inverting mode and the like. In this case, the user may merely designate a selected character string among the selective-substitution character strings, so that the selection operations of the arbitrary character string may be accomplished and thus, the operability thereof may be furthermore improved.

While the present invention has been described in detail with reference to the specific embodiment modes, the present invention may be apparently and readily modified and changed without departing from the technical spirit and scope of the present invention by those skilled in the art.

The present Patent Application has been made based upon Japanese Patent Application No. 2001-63851 filed on March 7, 2001, and contents of this Japanese Patent Application are incorporated herein as references.

### <INDUSTRIAL APPLICABILITY>

In accordance with the present invention, the telephone directory information can be retrieved by designating the arbitrary character string contained in the information provided on the Internet. Furthermore, since the connection address of the communication counter party is read out in response to the retrieve result, the entering operation of the connection address can be omitted, and the operability thereof can be improved.

## Claims

1. A portable wireless telephone apparatus for connecting lines among a plurality of wireless base stations through wireless channels, which are wire-connected to a switching station, so as to view information provided on the Internet, comprising:
retrieving means for collating an arbitrary character string present in said information under observation with a registered character string of telephone directory information stored in the own portable wireless telephone apparatus; and
control means operated in such a manner that when said retrieving means detects that a selected arbitrary character string is registered in said telephone directory information and a communication counter party corresponding to said arbitrary character string has been registered in said telephone directory information, said control means sets a telephone communication to said communication counter party.

2. A portable wireless telephone apparatus as claimed in claim 1, wherein:
said telephone directory information includes an identification information item for registering thereinto an arbitrary character string,
wherein said portable wireless telephone apparatus comprises means for setting as to whether or not the information registered into said identification information item is such an object to be retrieved by said retrieving means.

3. A portable wireless telephone apparatus as claimed in claim 1, or claim 2, comprising:
means operated in such a manner that when a selected arbitrary character string is not present in said telephone directory information, said selected arbitrary character string is registered into said telephone directory information.

4. A portable wireless telephone apparatus as claimed in any one of claim 1 to claim 3 wherein:
said control means sets a telephone communication for executing a connecting process operation which is selected from a connecting process operation of a voice telephone communication, a connecting process operation of an electronic mail, and a connecting process operation to the information provided on the Internet.

5. A portable wireless telephone apparatus as claimed in any one of claim 1 to claim 4, comprising:
counting means for counting a use frequent degree as to each of a connecting process operation of a voice telephone communication to a communication counter party, a connecting process operation of an electronic mail, and a connecting process operation to the information provided on the Internet; and
said control means sets the telephone communication as to such a connecting process operation whose count value counted by said counting means becomes the largest count value.

6. A portable wireless telephone apparatus as claimed in claim 5, comprising:
means for invalidating the counting process operation by said counting means.

7. A portable wireless telephone apparatus as claimed in any one of claim 1 to claim 6 wherein:
said selection of said arbitrary character string from the information under display is carried out by operating a button key of an input unit.

8. A portable wireless telephone apparatus as claimed in claim 7 wherein:
the character strings which have been registered in said telephone directory information among the information under display are displayed in a discriminatable manner with respect to other character strings, and said selection of the arbitrary character string is made from the character strings displayed in the discriminatable manner.

9. A portable wireless telephone apparatus for connecting lines among a plurality of wireless base stations through wireless channels, which are wire-connected to a switching station, so as to display accessed information provided on the Internet on a screen, comprising:
telephone directory information storage means operated in such a manner that when an arbitrary character string contained in said information displayed on the screen is designated/selected by input means, said arbitrary character string is registered into the telephone directory information storage means in relation to a transmitting destination address.

10. A portable wireless telephone apparatus as claimed in claim 9, comprising:
means for automatically recognizing as to whether or not said designated/selected arbitrary character string corresponds to any one of a telephone number, an electronic mail address, and an address of the information provided on the Internet, and for automatically setting the automatically-recognized arbitrary character string to a relevant item of said telephone directory information storage means.

11. A portable wireless telephone apparatus as claimed in claim 9, or claim 10 wherein:
in addition to items for registering "name", "telephone number", "electronic mail address", and "address of information provided on the Internet" respectively, such an item for classifying the arbitrary character string to register therein the classified arbitrary character strings is provided in said telephone directory information storage means.

12. A portable wireless telephone apparatus as claimed in any one of claim 9 to claim 11, comprising:
control means operated in such a manner that while the accessed information provided on the Internet is viewed, an arbitrary character string located in said information is designated/selected by the input means and said designated/selected arbitrary character string has been registered in said telephone directory information storage means, said control means sets a telephone communication to a transmitting destination address corresponding to said arbitrary character string.
